# EUROPÄISCHE PATENTANMELDUNG

(11) **EP 2 172 336 A1**
(43) Veröffentlichungstag der Anmeldung: **07.04.2010**
(21) Anmeldenummer: 08016743.0
(22) Anmeldetag: 24.09.2008
(51) Int. Cl.: B32B 27/28, B42D 15/00

(54) **Fälschungssichere Sicherheitsmerkmale in Sicherheits- oder Wertdokumenten**

(71) Anmelder: Bayer MaterialScience AG, 51368 Leverkusen (DE)
(72) Erfinder: Tziovaras, Georgios, 42275 Wuppertal (DE); Yesildag, Mehmet-Cengiz, 51377 Leverkusen (DE); Pophusen, Dirk, 51467 Bergisch Gladbach (DE); Pudleiner, Heinz, Dr., 47800 Krefeld (DE); Kinzel, Norbert, 50765 Köln (DE)

(57) **Zusammenfassung**

Die vorliegende Erfindung betrifft Schichtaufbauten aus thermoplastischen Kunststoffschichten enthaltend gedruckte Wasserzeichen als Sicherheitsmerkmale sowie ein Verfahren zu deren Herstellung und Verwendung für die Erhöhung der Fälschungssicherheit in Sicherheits- oder Wertdokumenten, vorzugsweise in Identifikationsdokumenten.

## Beschreibung

Die vorliegende Erfmdung betrifft Schichtaufbauten aus thermoplastischen Kunststoffschichten enthaltend gedruckte Sicherheitsmerkmale sowie ein Verfahren zu deren Herstellung und Verwendung für die Erhöhung der Fälschungssicherheit in Sicherheits- oder Wertdokumenten, vorzugsweise in Identifikationsdokumenten.

Wasserzeichen als Erkennungsmerkmal von Briefbögen und zur Erhöhung der Fälschungssicherheit beispielsweise von Geldscheinen sind allgemein bekannt. Sie werden bereits bei der Herstellung des Papiers in die Bögen eingebracht, so dass die Faserschicht des Papiers an den Stellen des Wasserzeichens dünner oder dicker ist, und bei durchscheinendem Licht das so genannte Wasserzeichen als transparenteres oder trüberes Bild sichtbar wird.

NL-A 8 900 016 beschreibt das Einbringen sogenannter Wasserzeichen in Kunststoffe, z.B. Kunststoffschichtverbunde oder Laminate. Dies erfolgt mittels Prägen mit einem Prägestempel, wodurch - vergleichbar zur Papierherstellung - ebenfalls dünnere und dickere Stellen innerhalb des Kunststoffschichtverbundes erzeugt werden, die bei Durchlicht das entsprechende Bild zu erkennen geben.

Solche Wasserzeichen stellen allerdings insbesondere bei Identifikationsdokumenten, wie z.B. Personalausweise, Reisepässen, Kreditkarten, insofern keine hinreichende Fälschungssicherheit dar, da ein Öffnen des Schicht oder Laminatverbundes und Austausch der individuellen Identifikationsmerkmale möglich ist, dass eingeprägte Wasserzeichen aber beim erneuten verschließen unverändert im Dokument verbleiben kann und die Fälschung unerkannt bleibt. Demnach besteht der Wunsch danach, die Fälschungssicherheit solcher Dokumente durch wasserzeichenartige Sicherheitsmerkmale zu erhöhen, die individuell gestaltbar sind, so dass ein nachträglicher Austausch der individuellen Identifikationsmerkmale durch Vergleich mit dem wasserzeichenartigen Sicherheitsmerkmal erkannt werden kann.

Mittels Prägung ist jedoch das Einbringen individueller Sicherheitsmerkmale, d.h. solcher Sicherheitsmerkmale, die im Extremfall in jedem einzelnen Sicherheitsdokument variieren, nicht oder nur mit nicht vertretbarem Kostenaufwand möglich, da für jede individuelle Gestaltung ein eigener Prägestempel benötigt würde und das resultierende Sicherheitsmerkmal keine ausreichende Bildqualität und damit Unterscheidungskraft besäße.

Zudem bestand das Problem, dass solche individuell gestaltbaren Sicherheitsmerkmale den Vorgang des Versiegelns eines solchen Sicherheits- oder Wertdokuments, vorzugsweise Identifikationsdokuments, wie z.B. dem Laminieren eines Schichtverbundes bei erhöhten Temperaturen, unbeschadet überstehen müssen.

Die Aufgabe, die der vorliegenden Erfindung zugrunde lag, bestand demnach darin, eine einfache Möglichkeit für das Einbringen eines individuell gestaltbaren Sicherheitsmerkmals in einen Schichtaufbau aus Kunststoffschichten einzubringen, der den Versiegelungsprozess zum resultierenden Sicherheits- oder Wertdokument unbeschadet übersteht.

Diese Aufgabe wurde erfindungsgemäß dadurch gelöst, dass ein Wasserzeichen als ein solches Sicherheitsmerkmal mittels Laserdruck auf eine unbeschichtete Seite einer Kunststoff-Folie innerhalb des Schichtaufbaus derart aufgedruckt wird, dass es erst beim Hindurchsehen durch den Schichtaufbau gegen Licht im Detail erkennbar wird, bei Aufsicht auf den Schichtverbund jedoch gar nicht oder erheblich schlechter zu erkennen ist. Das Aufbringen mittels Laserdruck ermöglicht die individuelle Gestaltung des Sicherheitsmerkmals bei gleichzeitiger Beständigkeit des Drucks gegen Hitzeeinwirkung beim Laminiervorgang.

Diese erfindungsgemäße Lösung umso überraschender, als bisher Kunststoff Folien überwiegend mittels analoger Drucktechniken, wie z. B. Offset- Druck, Tiefdruck oder Siebdruck, bedruckt werden. Je nach eingesetzter Kunststoff Folie müssen die Folien für analoge Druckverfahren entsprechend vorbehandelt werden. So müssen z.B bei Polyolefin-Folien vor dem Bedrucken die Oberflächenenergie der Folie gesteigert werden, etwa durch Beflammung oder Plasmabehandlung. Zudem ist der Farbauftrag bei den analogen Druckverfahren reaktiv dick, so dass Lösungsmittel o.ä. Inhaltsstoffe nicht vollständig aus der Farbschicht entfernt werden und in der Farbe verbleiben können. Dadurch wird die Folienoberfläche angelöst oder angequollen. Eine Vorbehandlung solcher Kunststoff Folien für den Einsatz in Sicherheitsdokumenten stellt jedoch einen Schwachpunkt im versiegelten, zumeist laminierten Schichtverbund dar, über den sich ein solches Dokument nachträglich Öffnen lässt.

Ein Aufdruck mittels Laserdruck hat zudem gegenüber anderen digitalen Druckverfahren folgende Vorteile: Es wird eine sehr gute Druckqualität mit einer hoher Druckgeschwindigkeit kombiniert. Die Ausdrucke sind beständiger gegen Sonneneinstrahlung, was mit Tintenstrahldruckern nur bei Verwendung von Spezialtinten erreicht werden kann. Die Laser-Druckkosten sind erheblich niedriger, und die Lebenserwartung der Geräte deutlich höher als beispielsweise von Tintenstrahldruckern. Zudem können Laserdrucker längere Standzeiten überbrücken ohne dass eine Wartung nötig wäre, da kein Vertrocknen der Düsen, z.B. bei Tintenstrahldruckern, erfolgen kann. Toner für Laserdrucker weisen demgegenüber erheblich längere Lagerfähigkeit auf.

Gegenstand der vorliegenden Erfmdung ist daher ein Schichtaufbau, **dadurch gekennzeichnet, dass** er wenigstens eine erste Schicht aus wenigstens einem thermoplastischen Kunststoff und wenigstens einem Füllstoff und eine weitere Schicht aus wenigstens einem thermoplastischen Kunststoff und wenigstens einem Füllstoff ("gefüllte Schichten") aufweist, welche aus wenigstens einer ersten Kunststoff-Folie aus jeweils wenigstens einem thermoplastischen Kunststoff und wenigstens einem Füllstoff und wenigstens einer weiteren Kunststoff-Folie aus jeweils wenigstens einem thermoplastischen Kunststoff und wenigstens einem Füllstoff ("gefüllte Folien") hergestellt wurde, wobei zwischen den beiden gefüllten Schichten wenigstens ein mittels Laserdruck auf wenigstens eine bei der Herstellung eingesetzte Kunststoff-Folie aufgebrachtes Wasserzeichen enthalten ist.

Im Rahmen der Erfindung ist unter einem mittels Laserdruck aufgebrachten Wasserzeichen ein mittels Laserdruck aufgedrucktes Sicherheitsmerkmal zu verstehen, welches für den Betrachter erst beim Hindurchsehen durch den Schichtaufbau gegen Licht erkennbar wird, d.h. dieses Sicherheitsmerkmal ist für das menschliche Auge beim Hindurchsehen durch den Schichtaufbau gegen Licht im sichtbaren Wellenlängenbereich von 380 nm bis 780 nm deutlicher zu erkennen ist als bei Aufsicht auf den Schichtaufbau im Auflicht. Bei Aufsicht auf den Schichtaufbau ohne Gegenlicht ist dieses Sicherheitsmerkmal entweder gar nicht oder wesentlich schlechter zu erkennen. Dabei handelt es sich um eine Eigenschaft des erfindungsgemäßen Sicherheitsmerkmals, welche vergleichbar mit herkömmlichen Wasserzeichen ist. Das Wasserzeichen im Rahmen der vorliegenden Erfindung wird jedoch nicht wie die bekannten herkömmlichen Wasserzeichen durch die Erzeugung dünnerer und dickerer Bereiche im Material, wie z.B. mittels Prägung, in das Material eingebracht, sondern mittels Laserdruck auf die verwendete Folie aufgebracht.

Das oder die Wasserzeichen können mittels Laserdruck auf wenigstens einer der beiden gefüllten Folien aufgebracht sein.

Alternativ kann der Schichtaufbau wenigstens eine weitere Schicht aus wenigstens einem thermoplastischen Kunststoff zwischen den beiden gefüllten Schichten aufweisen, wobei diese Schicht zwischen den beiden gefüllten Schichten aus einer transparenten Kunststoff-Folie aus wenigstens einem thermoplastischen Kunststoff hergestellt wurde, auf welche das oder die Wasserzeichen mittels Laserdruck aufgebracht ist (sind).

Unter transparent ist im Rahmen der Erfindung zu verstehen, dass die Lichttransmission dieser Folie im sichtbaren Wellenlängenbereich von 380 nm bis 780 nm mindestens 50 %, bevorzugt mindestens 65 %, besonders bevorzugt mindestens 80 % und in ganz besonders bevorzugten Ausführungsformen mindestens 90 % beträgt.

Bei dem thermoplastischen Kunststoff der jeweiligen gefüllten Schicht oder der Schicht zwischen den beiden gefüllten Schichten kann es sich unabhängig voneinander bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen handeln. Für bestimmte Anwendungen kann es vorteilhaft sein, einen transparenten thermoplastischen Kunststoff einzusetzen.

Besonders geeignete thermoplastische Kunststoffe sind Polycarbonate oder Copolycarbonate auf Basis von Diphenolen, der Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol oder Polystyrolacrylnitril (SAN), transparente thermoplastische Polyurethane, sowie Polyolefme, wie beispielhaft und vorzugsweise transparente Polypropylentypen oder Polyolefme auf der Basis von cyclischen Olefinen (z.B. TOPAS^{®}, Hoechst), Poly- oder Copolykondensate der Terephthalsäure, wie beispielhaft und vorzugsweise Poly- oder Copolyethylenterephthalat (PET oder CoPET), glycol-modifiziertes PET (PETG) oder Poly- oder Copolybutylenterephthalat (PBT oder CoPBT) oder Mischungen aus den vorangehend genannten.

Ganz besonders bevorzugt sind Polycarbonate oder Copolycarbonate, insbesondere mit mittleren Molekulargewichten M_{w} von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten M_{w} von 10.000 bis 200.000, bevorzugt von 26.000 bis 120.000. In besonders bevorzugten Ausführungsformen der Erfmdung handelt es sich bei dem Blend um einen Blend aus Polycarbonat oder Copolycarbonat mit Poly- oder Copolybutylenterephthalat. Bei einem solchen Blend aus Polycarbonat oder Copolycarbonat mit Poly- oder Copolybutylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat, vorzugsweise mit 1 bis 90 Gew.-% Polycarbonat und 99 bis 10 Gew.-% Polybutylenterephthalat handeln, wobei sich die Anteile zu 100 Gew.-% addieren. Besonders bevorzugt kann es sich bei einem solchen Blend aus Polycarbonat oder Copolycarbonat mit Polyoder Copolybutylenterephthalat um einen solchen mit 20 bis 85 Gew.-% Polycarbonat oder Copolycarbonat und 80 bis 15 Gew.% Poly- oder Copolybutylenterephthalat, vorzugsweise mit 20 bis 85 Gew.-% Polycarbonat und 80 bis 15 Gew.% Polybutylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat um einen solchen mit 35 bis 80 Gew.-% Polycarbonat oder Copolycarbonat und 65 bis 20 Gew.-% Polyoder Copolybutylenterephthalat, vorzugsweise mit 35 bis 80 Gew.-% Polycarbonat und 65 bis 20 Gew.-% Polybutylenterephthalat handeln, wobei sich die Anteile zu 100 Gew.-% addieren.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1, 1 -Bis-(4-hydroxyphenyl)- 1 -phenyl-ethan, 1, 1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder

Dihydroxydiphenylcycloalkane der Formel (Ia) 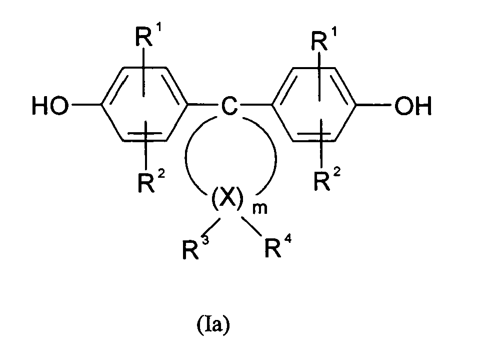 worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C₁-C₆-Alkyl und
- X: Kohlenstoff bedeuten,
mit der Massgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha - Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formenl (Ia) sind solche mit 5 und 6 Ring-C-Atomen X im cycloaliphatischen Rest (m = 4 oder 5 in Formel (Ia)), beispielsweise die Diphenole der Formeln (Ib) bis (Id),

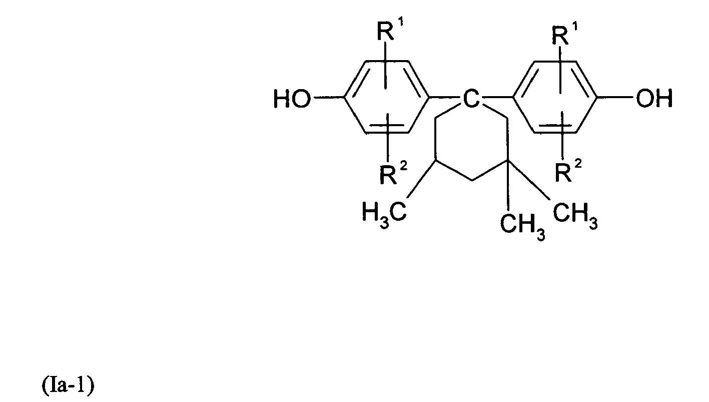

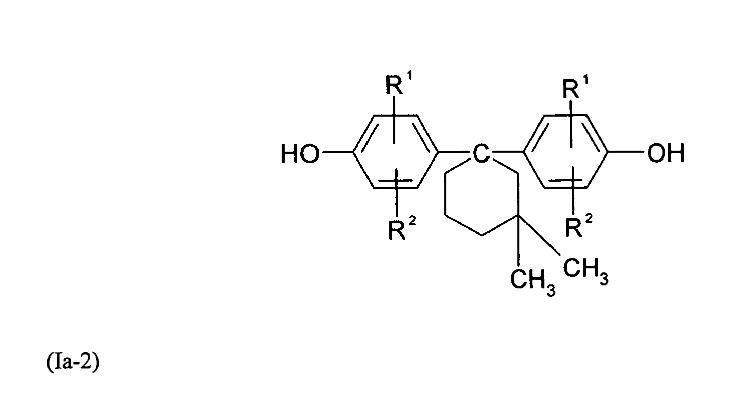

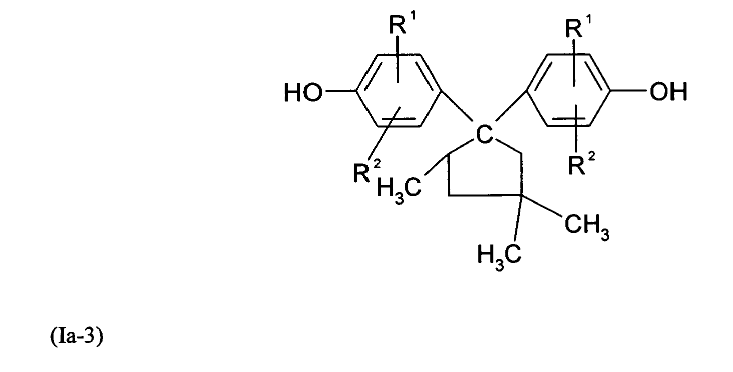

Ein ganz besonders bevorzugtes Dihydroxydiphenylcycloalkane der Formenl (Ia) ist 1,1-Bis-(4-hydroxyphenyl)-3,3,5-trimethyl-cyclohexan (Formel (Ia-1) mit R¹ und R² gleich H).
Solche Polycarbonate können gemäss der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1, 1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl, 2,2-Bis-(4-hydroxyphenyl)-propan und 1,1-Bis-(4-hydroxyphenyl)-3,3,5-trimethyl-cyclohexan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (II) sein, 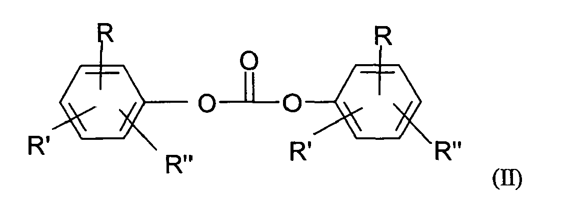 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R"' für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 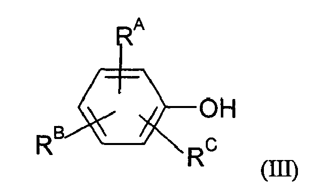 wobei
- R^{A}: für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
- R^{B}, R^{C}: unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Als Poly- oder Copolykondensate der Terephthalsäure eignen sich in bevorzugten Ausführungsformen der Erfmdung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste , bezogen auf die Dicarbonsäurekomponente, und mindestens 80 Mol-%, vorzugsweise mindestens 90 Mol-% Ethylenglykol- und/oder Butandiol-1,4-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 20 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Bevorzugt weist die eingesetzte, das oder die mittels Laserdruck aufgebrachten Sicherheitsmerkmal(e) aufweisende Kunststoff-Folie einen spezifischen Oberflächenwiderstand von 10⁵ bis 10¹⁴ Ω, bevorzugt von 10⁷ bis 10¹³ Ω, besonders bevorzugt von 10⁸ bis 10¹² Ω auf. Der spezifische Oberflächenwiderstand in Ω wird gemäß DIN IEC 93 bestimmt.

In einer bevorzugten Ausführungsform des erfindungsgemäßen Schichtaufbaus ist eine geeignete Kunststoff-Folie für die Schicht zwischen den beiden gefüllten Schichten eine solche mit einen Schichtaufbau umfassend wenigstens drei Schichten, wobei
(1) wenigstens eine innere Schicht aus einem thermoplastischen Kunststoff mit einer Glastemperatur T_{g(Innen)} und
(2) wenigstens eine untere und wenigstens eine obere Schicht (äußere Schichten) aus einem thermoplastischen Kunststoff mit einer Glastemperatur T_{g(Außen)}, welche niedriger ist als die Glastemperatur T_{g(Innen)}.

Eine ganz besonders bevorzugte mehrschichtige Kunststoff-Folie für die Schicht zwischen den beiden gefüllten Schichten mit einem solchen Schichtaufbau umfasst drei Schichten, davon eine innere und jeweils eine untere und eine obere Schicht, unabhängig voneinander aus den vorangehend genannten thermoplastischen Kunststoffen.

Sofern es sich bei der der mehrschichtigen Kunststoff-Folie um die das oder die mittels Laserdruck aufgebrachten Sicherheitsmerkmal(e) aufweisende Kunststoff-Folie handelt, weist vorzugsweise wenigstens die untere oder die obere Schicht, bevorzugt die untere und die obere Schicht der mehrschichtigen Kunststoff-Folie für die Schicht zwischen den beiden gefüllten Schichten einen spezifischen Oberflächenwiderstand von 10⁵ bis 10¹⁴ Ω, bevorzugt von 10⁷ bis 10¹³ Ω, besonders bevorzugt von 10⁸ bis 10¹² Ω auf.

In diesen Mehrschichtaufbauten der Kunststoff-Folie für die Schicht zwischen den beiden gefüllten Schichten ist vorzugsweise die Glastemperatur T_{g(Außen)} mindestens 5°C niedriger, bevorzugt mindestens 10°C niedriger ist als die Glastemperatur T_{g(Innen)}.

Weiterhin bevorzugt kann die thermoplastische Kunststoffzusammensetzung der eingesetzten, das oder die mittels Laserdruck aufgebrachten Sicherheitsmerkmal(e) aufweisenden Kunststoff-Folie zur Erzielung des spezifischen Oberflächenwiderstandes beispielsweise ein Additiv ausgewählt aus tertiären oder quaternären, bevorzugt quaternären Ammonium- oder Phosphoniumsalzen einer teiloder perfluorierten organischen Säure oder quaternären Ammonium- oder Phosphoniumhexafluorophosphaten, bevorzugt einer teil- oder perfluorierten Alkylsulfonsäure, vorzugsweise einer Perfluoralkylsulfonsäure enthalten.

Solche Additive und deren Verwendung als Antistatika sind in der Literatur beschrieben (vgl. DE-A 25 06 726, EP-A 1 290 106, EP 897 950 A2 oder US 6,372,829).

Als Anionen solcher als Additive geeigneten Salze kommen beispielsweise bevorzugt teil- oder perfluorierte Alkylsulfonate, Cyanoperfluoralkansulfonylamide, Bis(cyano)perfluoralkylsulfonylmethide, Bis(perfluoralkylsulfonyl)imide, Bis(perfluoralkylsulfonyl)methide, Tris(perfluoralkylsulfonyl)methide oder Hexafluorophosphate in Frage. Besonders bevorzugt sind teil- oder perfluorierte Alkylsulfonate, ganz besonders bevorzugt Perfluoralkylsulfonate. Als Kationen solcher erfindungsgemäß als Additive geeigneten Salze kommen beispielsweise bevorzugt acylische oder cyclische tertiäre oder quaternäre Ammonium- oder Phosphoniumkationen. Als geeignete cyclische Kationen kommen beispielsweise Pyridinium, Pyridazidinium, Pyrimidiunium, Pyrazinium, Imidazolium, Pyrazolium, Thiazolium Oxazolim oder Thiazolium-Kationen in Frage. Als geeignete acyclischen Kationen kommen beispielsweise die in die folgende Formel (IV) integrierten in Frage.

Besonders bevorzugt geeignete quarternäre Ammonium- oder Phosphoniumsalze einer Perfluoralkylsulfonsäure sind beispielsweise solche der allgemeinen Formel (IV)

R¹-SO₃ XR²R³R⁴R⁵ (IV)

in welcher
- X: N oder P, bevorzugt N bedeuten,
- R¹: teil- oder perfluorierte cyclische oder lineare, verzweigte oder unverzweigte Kohlenstoffketten mit 1 bis 30 Kohlenstoffatomen, bevorzugt 4 bis 8 Kohlenstoffatomen, im Falle der cyclischen Reste bevorzugt solche mit 5 bis 7 Kohlenstoffatomen,
- R²: unsubstituierte oder durch Halogen, Hydroxy, Cycloalkyl oder Alkyl, insbesondere durch C₁ bis C₃-Alkyl bzw.C₅ bis C₇-Cycloalkyl, substituierte, cyclische oder lineare, verzweigte oder unverzweigte Kohlenstoffketten mit 1 bis 30 Kohlenstoffatomen, bevorzugt 3 bis 10 Kohlenstoffatomen, im Falle cyclischer Reste bevorzugt solche mit 5 bis 7 Kohlenstoffatomen, besonders bevorzugt Propyl, 1 -Butyl, 1-Pentyl, Hexyl, Isopropyl, Isobutyl, tert-Butyl, Neopentyl, 2-Pentyl, Iso-Pentyl, Iso-Hexyl, Cyclohexyl, Cyclohexylmethyl und Cyclopentyl,
- R³, R⁴, R⁵: jeweils unabhängig voneinander unsubstituierte oder durch Halogen, Hydroxy, Cycloalkyl oder Alkyl, insbesondere durch C₁ bis C₃-Alkyl, bzw.C₅ bis C₇-Cycloalkyl, substituierte, cyclische oder lineare, verzweigte oder unverzweigte Kohlenstoffketten mit 1 bis 30 Kohlenstoffatomen, bevorzugt 1 bis 10 Kohlenstoffatomen, im Falle cyclischer Reste bevorzugt solche mit 5 bis 7 Kohlenstoffatomen, besonders bevorzugt Methyl, Ethyl, Propyl, 1-Butyl, 1-Pentyl, Hexyl, 1-Isopropyl, Isobutyl, tert-Butyl, Neopentyl, 2-Pentyl, Iso-Pentyl, Iso-Hexyl, Cyclohexyl, Cyclohexylmethyl und Cyclopentyl
bedeuten.

Eine bevorzugte Auswahl stellen dabei die Ammonium- oder Phosphoniumsalze dar in welchen
- X: N oder P, bevorzugt N bedeuten,
- R¹: perfluorierte lineare oder verzweigte Kohlenstoffketten mit 1 bis 30 Kohlenstoffatomen, bevorzugt 4 bis 8 Kohlenstoffatomen,
- R²: jeweils unabhängig voneinander halogenierte oder nichthalogenierte lineare oder verzweigte Kohlenstoffketten mit 1 bis 30 Kohlenstoffatomen, bevorzugt 3 bis 10 Kohlenstoffatomen besonders bevorzugt Propyl, I-Butyl, 1-Pentyl, Hexyl, Isopropyl, Isobutyl, tert-Butyl, Neopentyl, 2-Pentyl, Iso-Pentyl, Iso-Hexyl,
- R³, R⁴, R⁵: jeweils unabhängig voneinander halogenierte oder nichthalogenierte lineare oder verzweigte Kohlenstoffketten mit 1 bis 30 Kohlenstoffatomen, bevorzugt 1 bis 10 Kohlenstoffatomen steht; besonders bevorzugt Methyl, Ethyl, Propyl, 1-Butyl, 1-Pentyl, Hexyl, Isopropyl, Isobutyl, tert-Butyl, Neopentyl, 2-Pentyl, Iso-Pentyl, Iso-Hexyl
bedeuten.

Bevorzugte geeignete quarternäre Ammonium- oder Phosphoniumsalze sind:
- Perfluoroctansulfonsäuretetrapropylammoniumsalz,
- Perfluorbutansulfonsäuretetrapropylammoniumsalz,
- Perfluoroctansulfonsäuretetrabutylammoniumsalz,
- Perfluorbutansulfonsäuretetrabutylammoniumsalz,
- Perfluoroctansulfonsäuretetrapentylammoniumsalz,
- Perfluorbutansulfonsäuretetrapentylammoniumsalz,
- Perfluoroctansulfonsäuretetrahexylammoniumsalz,
- Perfluorbutansulfonsäuretetrahexylammoniumsalz,
- Perfluorbutansulfonsäuretrimethylneopentylammoniumsalz,
- Perfluoroctansulfonsäuretrimethylneopentylammoniumsalz,
- Perfluorbutansulfonsäuredimethyldineopentylammoniumsalz,
- Perfluoroctansulfonsäuredimethyldineopentylammoniumsalz,
- N-Methyl-tripropylammoniumperfluorbutylsulfonat,
- N-Ethyl-tripropylammoniumperfluorbutylsulfonat,
- Tetrapropylammoniumperfluorbutylsulfonat,
- Diisopropyldimethylammoniumperfluorbutylsulfonat,
- Diisopropyldimethylammoniumperfluoroctylsulfonat,
- N-Methyl-tributylammoniumperfluoroctylsulfonat
- Cyclohexyldiethylmethylammoniumperfluoroctylsulfonat,
- Cyclohearyltrimethylammoniumperfluoroctylsulfonat,
   sowie die entsprechenden Phosphoniumsalze. Bevorzugt sind die Ammoniumsalze.

Bevorzugt können auch ein oder mehrere der vorstehend genannten quartären Ammonium- oder Phosphoniumsalze, also auch Mischungen eingesetzt werden.

Ganz besonders geeignet ist das Perfluoroctansulfonsäuretetrapropylammoniumsalz, das Perfluoroctansulfonsäuretetrabutylammoniumsalz, das Perfluoroctansulfonsäuretetrapentylammoniumsalz, das Perfluoroctansulfonsäuretetrahexylammoniumsalz und das Perfluoroctansulfonsäuredimethyldiisopropylammoniumsalz sowie die entsprechenden Perfluorbutansulfonsäuresalze.

In einer ganz besonders bevorzugten Ausführungsform wird das Perfluorbutansulfonsäuredimethyldiisopropylammoniumsalz (Diisopropyldimethylammoniumperfluorbutylsulfonat) verwendet.

Die genannten Salze sind bekannt oder können nach bekannten Methoden hergestellt werden. Die Salze der Sulfonsäuren lassen sich beispielsweise durch Zusammengeben äquimolarer Mengen der freien Sulfonsäure mit der Hydroxyform des entsprechenden Kations in Wasser bei Raumtemperatur und Einengen der Lösung darstellen. Andere Herstellungsverfahren sind beschrieben z.B. in DE-A 1 966 931 und NL-A 7 802 830.

Die genannten Salze werden vorzugsweise in Mengen von 0.001 bis 2 Gew.%, bevorzugt von 0.1 bis 1 Gew.% den thermoplastischen Kunststoffen vor der Formgebung zur Kunststoff-Folie, welche zum Beispiel durch Extrusion oder Coextrusion erfolgen kann, zugegeben.

Den thermoplastischen Kunststoffen können auch weitere dem Fachmann bekannte und übliche Additive und Zusatzstoffe (z.B. Hilfs- und Verstärkungsstoffe) zugesetzt werden.

Bei dem Füllstoff in den gefüllten Schichten handelt es sich bevorzugt unabhängig voneinander um ein Farbpigment oder einen sonstigen Füllstoff zur Erzeugung einer Transluzenz der gefüllten Schichten, bevorzugt um Titandioxid, Zirkoniumdioxid, Bariumsulfat oder Glasfasern.

Bevorzugt handelt es sich bei den gefüllten Schichten sowie bei den zu deren Herstellung eingesetzten gefüllten Folien um solche mit einer Transmission im sichtbaren Wellenlängenbereich von 380 nm bis 780 nm von kleiner 50%, bevorzugt von kleiner 35 %, besonders bevorzugt von kleiner 25 %, in ganz besonders bevorzugten Ausführungsformen von kleiner als 15 %.

Die daraus resultierende Transluzenz der das aufgedruckte Wasserzeichen umgebenden gefüllten Schichten verstärkt, dass das aufgedruckte Wasserzeichen erst beim Hindurchsehen durch den Schichtaufbau gegen Licht offenbart wird, d.h. deutlicher zu erkennen ist als bei Aufsicht auf den Schichtaufbau ohne Gegenlicht.

Die genannten Füllstoffe werden vorzugsweise in Mengen von 2 bis 60 Gew.-%, besonders bevorzugt von 20 bis 40 Gew.-%, bezogen auf das Gesamtgewicht Füllstoff und thermoplastisches Kunststoffmaterial, den thermoplastischen Kunststoffen vor der Formgebung zur Kunststoff-Folie, welche zum Beispiel durch Extrusion oder Coextrusion erfolgen kann, zugegeben.

Für den Fall, dass das oder die Wasserzeichen mittels Laserdruck auf wenigstens einer der beiden gefüllten Folien aufgebracht ist (sind), kann diese gefüllte Folie in bevorzugten Ausführungsformen sowohl wenigstens einen der vorangehend genannten Füllstoffe als auch eines der vorangehend genannten Salze als Additive in den entsprechenden vorangehend genannten Mengen enthalten.

Die erfmdungsgemäß zu verwendenden Kunststoff-Folien - sowohl für die gefüllten Folien als auch die Folie für die gegebenenfalls vorhandene Schicht zwischen den beiden gefüllten Schichten - weisen bevorzugt eine Dicke von 55 µm bis 750 µm, besonders bevorzugt von 100 µm bis 300 µm auf. In bevorzugten Ausführungsformen der Erfmdung, in denen es sich bei der Kunststoff-Folie für die Schicht zwischen den beiden gefüllten Schichten um einen Schichtaufbau umfassend wenigstens drei Schichten handelt, ist das Verhältnis der Schichtdicke der inneren Schicht bzw. der Gesamtschichtdicke gegebenenfalls mehrerer innerer Schichten zur Schichtdicke der unteren und oberen Schicht bzw. zur jeweiligen Gesamtschichtdicke gegebenenfalls mehrerer unterer und oberer Schichten 1 : 1 : 1 bis 20 : 1 : 1, bevorzugt 2 : 1 : 1 bis 5 : 1 : 1.

Bei dem oder den mittels Laserdruck aufgebrachten Wasserzeichen im erfindungsgemäßen Schichtaufbau kann es sich um Schwarz/Weiß- oder Farb-Aufdruck handeln, der ein- oder mehrfarbig bzw. im Falle eines Schwarz/Weiß-Aufdrucks in unterschiedlichen Grauabstufungen oder lediglich in Schwarz sein kann. Eine weitere Verstärkung des Merkmals, dass das aufgedruckte Wasserzeichen erst beim Hindurchsehen durch den Schichtaufbau gegen Licht offenbart wird, d.h. deutlicher zu erkennen ist als bei Aufsicht auf den Schichtaufbau ohne Gegenlicht, kann dadurch erreicht werden, dass das Wasserzeichen mit einer Farbe aufgedruckt wird, wobei der mit dem Wasserzeichen bedruckte Teil des Kunststoffs deutlich weniger lichtdurchlässig ist als der das Wasserzeichen umgebende unbedruckte Kunststoff. Bevorzugt handelt es sich daher bei dem oder den mittels Laserdruck aufgebrachten Wasserzeichen im erfindungsgemäßen Schichtaufbau um einen scharfen Schwarz/Weiß-Aufdruck mit geringen Grauabstufungen. Vorzugsweise beträgt die Differenz der Transmission im sichtbaren Wellenlängenbereich von 380 nm bis 780 nm zwischen dem umgebenden Kunststoff und dem mit dem Wasserzeichen bedruckten Teil des Kunststoffs 10% bis 80%, besonders bevorzugt 15% bis 75%, in ganz besonders bevorzugten Ausführungsformen bei Aufdruck auf eine transparente Kunststofffolie 50 bis 75%.

Bei dem oder den mittels Laserdruck aufgebrachten Wasserzeichen im erfindungsgemäßen Schichtaufbau handelt es sich bevorzugt um einen oder mehrere teilflächige(n) Aufdruck(e), bevorzugt um einen oder mehrere individuelle(n) Aufdruck(e). Unter individuell ist im Rahmen der Erfmdung zu verstehen, dass der Aufdruck von Schichtaufbau zu Schichtaufbau in seiner Gestaltung, insbesondere Formgestaltung variieren kann. Beispielsweise ist unter einem individuellen Aufdruck im Rahmen der Erfmdung ein solcher zu verstehen, der bei einem personalisierten Identifikationsdokument ganz oder teilweise die individuellen personalisierenden Identifikationsmerkmale aufweist, welche gegebenenfalls für jedes einzelne Dokument unterschiedlich sein können und bevorzugt auch sind.

Der erfindungsgemäße Schichtaufbau weist bevorzugt einen weiteren teilflächigen Aufdruck, bevorzugt einen teilflächigen Farblaseraufdruck auf, welcher jedoch im Gegensatz zu dem oder den mittels Laserdruck aufgebrachten Wasserzeichen bereits bei Aufsicht auf den Schichtaufbau ohne Gegenlicht deutlich zu erkennen ist. Bevorzugt handelt es sich bei diesem Aufdruck um individuelle personalisierende Identifikationsmerkmale, wie z.B. einen Porträtdruck für das Foto einer Person und/oder deren sonstiger Identifikationsmerkmale wie Fingerabdruck, Name, Adresse, Geburtstag, Geburtsort und/oder einer Kennummer, wie z.B. Personalausweisnummer, Kontonummer, Kreditkartennummer etc.. In besonders bevorzugten Ausführungsformen des erfindungsgemäßen Schichtaufbaus ist dieser teilflächige Aufdruck, bevorzugt teilflächige Farblaseraufdruck der Form nach ganz oder teilweise mit dem mittels Laserdruck aufgebrachten Wasserzeichen identisch. Eine beispielhafte Ausgestaltung eines solchen erfindungsgemäßen Schichtaufbaus könnte z.B. einen Porträtdruck für das Foto einer Person mittels Farblaserdruck aufweisen und den gleichen Porträtdruck als mittels Laserdruck aufgebrachtes Wasserzeichen, vorzugsweise als Schwarz/Weiß-Aufdruck aufweist.

Ein solcher weiterer teilflächiger Aufdruck kann vorzugsweise sowohl auf wenigstens eine der im erfindungsgemäßen Schichtaufbau nach außen weisenden Seiten wenigstens einer der gefüllten Schichten oder auf wenigstens einer Seite einer zusätzlichen transparenten Schicht, welche außen auf eine der gefüllten Schichten aufgebracht ist, aufgedruckt sein.

Eine weitere bevorzugte Ausführungsform des erfindungsgemäßen Schichtaufbaus ist daher eine solche, in der auf wenigstens eine, bevorzugt eine der beiden gefüllten Schichten eine weitere Schicht aus wenigstens einem thermoplastischen Kunststoff aufgebracht ist, welche bevorzugt transparent ist und einen solchen weiteren teilflächigen Aufdruck aufweist. Eine solche zusätzliche Schicht kann vorzugsweise unabhängig von den anderen Schichten aus wenigstens einem der vorangehend genannten thermoplastischen Kunststoffe ausgebildet sein.

Der erfindungsgemäße Schichtaufbau kann zudem weitere Schichten, wie z.B. Klebeschichten, Hafivermittlerschichten, Schutz- und/oder Deckschichten aufweisen.

Der erfmdungsgemäße Schichtaufbau eignet sich bevorzugt als Bestandteil von Sicherheits- oder Wertdokumenten, bevorzugt personalisierten Sicherheitsdokumenten ("personalisierten Identifikationsdokumenten"), ganz besonders bevorzugt solchen in Form verklebter oder laminierter Schichtverbunde in Form von Kunststoffkarten, wie z.B. Personalausweisen, Reisepässen, Führerscheinen, Kreditkarten, Bankkarten oder sonstigen Ausweis- oder Zahlungsdokumenten etc, um deren Fälschungssicherheit zu erhöhen.

Weiterhin Gegenstand der vorliegenden Erfindung ist daher ein Sicherheits- oder Wertdokument, bevorzugt personalisiertes Sicherheitsdokument, besonders bevorzugt ein solches in Form eines verklebten oder laminierten, bevorzugt laminierten Schichtverbundes in Form einer Kunststoffkarte enthaltend wenigstens einen erfindungsgemäßen Schichtaufbau.

Ein solcher erfindungsgemäßes Sicherheits- oder Wertdokument kann erfindungsgemäß dadurch hergestellt werden, dass der entsprechende Folienstapel enthaltend die vorab entsprechend bedruckte(n) Kunststoff-Folie(n) gebildet uns anschließend verklebt und/oder laminiert wird. Das Laminieren, vorzugsweise mittels Druck und Temperaturen über der Erweichungstemperatur der Folie(n), ist im Rahmen der Herstellung von Sicherheits- oder Wertdokumenten in der Regel gegenüber dem bloßen Verkleben bevorzugt, da durch Laminieren ein nachträgliches Öffnen des Schichtverbundes ohne Zerstörung der Wasserzeichen erschwert bzw. gegebenenfalls sogar vollständig verhindert wird. Es können aber auf einen zunächst laminierten Schichtverbund auch nachträglich noch weitere Schichten aufgeklebt werden oder gegebenenfalls auch anderweitig aufgebracht werden, gegebenenfalls durch Aufsprühen oder Aufrakeln.

Weiterhin Gegenstand der vorliegenden Erfmdung ist daher ein Verfahren zur Herstellung eines erfindungsgemäßen Sicherheits- oder Wertdokuments, **dadurch gekennzeichnet, dass** wenigstens
a) eine Kunststoff-Folie aus wenigstens einem thermoplastischen Kunststoff und gegebenenfalls wenigstens einem Füllstoff auf einer Seite mittels Laserdruck mit wenigstens einem Wasserzeichen bedruckt wird, und
b) die mit wenigstens einem Wasserzeichen bedruckte Kunststoff-Folie auf der anderen Seite oder wenigstens eine weitere Kunststoff-Folie aus wenigstens einem thermoplastischen Kunststoff und gegebenenfalls wenigstens einem Füllstoff auf einer Seite mit wenigstens einem weiteren teilflächigen Aufdruck, bevorzugt mittels Laserdruck mit wenigstens einem weiteren teilflächigen Aufdruck, besonders bevorzugt mittels Farblaserdruck mit wenigstens einem teilflächigen Farbaufdruck versehen wird, welcher bereits bei Aufsicht auf den Schichtaufbau ohne Gegenlicht deutlich zu erkennen ist, und
c) ein Folienstapel gebildet wird enthaltend
   i) wenigstens eine erste Kunststoff-Folie aus jeweils wenigstens einem thermoplastischen Kunststoff und wenigstens einem Füllstoff ("erste gefüllte Folie"), und
   ii) wenigstens eine weitere Kunststoff-Folie aus jeweils wenigstens einem thermoplastischen Kunststoff und wenigstens einem Füllstoff ("weitere gefüllte Folie"), und
   iii) gegebenenfalls wenigstens eine transparente Kunststoff-Folie aus wenigstens einem thermoplastischen Kunststoff zwischen der ersten und weiteren gefüllten Folie ("Zwischenfolie"),
      wobei das oder die mittels Laserdruck aufgebrachte(n) Wasserzeichen sich auf wenigstens einer der Folien unter i., ii. oder iii. befindet und für den Fall, dass sich das oder die mittels Laserdruck aufgebrachte(n) Wasserzeichen auf der Zwischenfolie unter iii. befindet, diese Folie zwingend im Folienstapel enthalten ist, und die Folien derart angeordnet sind, dass sich das oder die mittels Laserdruck aufgebrachte(n) Wasserzeichen zwischen der ersten und weiteren gefüllten Folie befindet, und
   iv) gegebenenfalls wenigstens eine weitere, transparente, auf einer der gefüllten Folien aufliegenden Kunststoff-Folie, welche den weiteren mittels Laserdruck aufgebrachten teilflächigen Aufdruck, bevorzugt mittels Farblaserdruck aufgebrachten teilflächigen Farbaufdruck aufweist ("Aufdruckfolie"), und
   v) gegebenenfalls weiterer Kunststoff-Schutzfolien ("Schutzfolie(n)"), und
      der Folienstapel anschließend laminiert und/oder verklebt, bevorzugt laminiert wird. Gegebenenfalls wird der laminierte Folienstapel anschließend noch in eine bestimmte Form, z.B. Kartenform zugeschnitten. Dies kann jedoch auch vor dem Lamineren und/oder Verkleben erfolgen.

Im Folgenden werden einige bevorzugte Ausführungsformen erfindungsgemäßer Schichtaufbauten für die Herstellung eines Sicherheits- oder Wertdokuments und deren Herstellung beschrieben, wobei diese beispielhafte Beschreibung in keiner Weise als Beschränkung der Erfmdung zu verstehen ist.

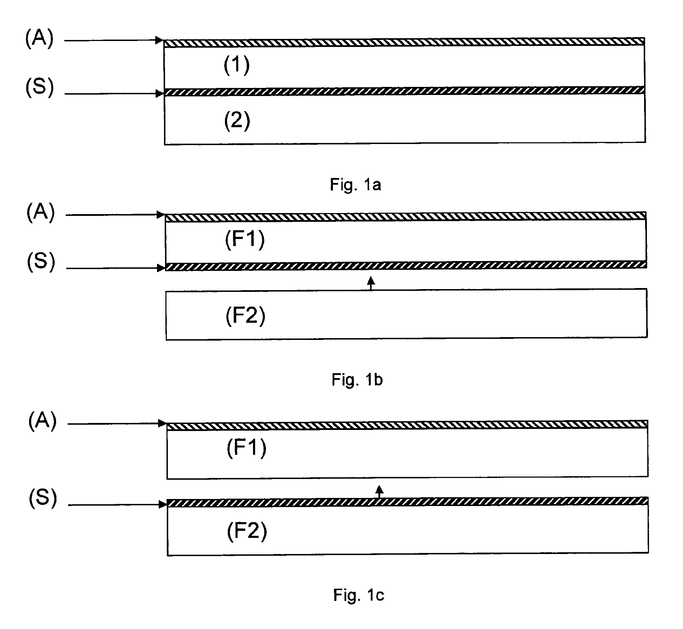

In einer einfachen beispielhaften Ausführungsform des erfindungsgemäßen Schichtaufbaus für ein erfindungsgemäß hergestelltes Sicherheits- oder Wertdokument weist ein solcher eine erste und eine zweite gefüllte Schicht (1) und (2) auf, zwischen denen ein mittels Laserdruck aufgebrachtes Wasserzeichen (S) enthalten ist. Der Schichtaufbau kann einen weiteren in Aufsicht deutlich erkennbaren teilflächigen Aufdruck (A) aufweisen. Eine solche Ausführungsform ist schematisch in Fig. 1a dargestellt. Ein Sicherheits- oder Wertdokument enthaltend einen solchen Schichtaufbau kann erfmdungsgemäß einerseits hergestellt werden, indem eine erste gefüllte Folie (F1) auf der einen Seite mit dem Wasserzeichen (S) und auf der anderen Seite mit dem weiteren Aufdruck (A) bedruckt wird, die zweite gefüllte Folie (F2) auf die Seite mit dem aufgedruckten Wasserzeichen (S) aufgelegt wird (vgl. Fig. 1b) und der Folienstapel anschließend laminiert wird. Andererseits kann ein Sicherheits- oder Wertdokument enthaltend einen solchen Schichtaufbau erfindungsgemäß hergestellt werden, indem eine erste gefüllte Folie (F1) auf einer Seite mit dem weiteren Aufdruck (A) und eine zweite gefüllte Folie (F2) auf einer Seite mit Wasserzeichen (S) bedruckt wird, die beiden Folien so aufeinander gelegt werden, dass die mit dem Wasserzeichen (S) bedruckte Seite der zweiten gefüllten Folie (F2) nach innen und die mit dem weiteren Aufdruck (A) bedruckte Seite der ersten gefüllten Folie (F1) nach außen weisen (vgl. Fig. 1c und der Folienstapel anschließend laminiert wird. In beiden Fällen handelt es sich bei dem erfindungsgemäßen Schichtaufbau um einen Zweischichtaufbau, unabhängig davon, ob die beiden verwendeten gefüllten Folien sich in Ihrer Zusammensetzung unterscheiden.

Im Rahmen der Erfindung bezeichnet der Begriff Schicht demnach auch einen solchen Bestandteil eines Schichtaufbaus, der im Rahmen der Herstellung aus einer Folie entstanden ist, unabhängig von der nachträglichen Unterscheidungsmöglichkeit von benachbarten Schichten in diesem Schichtaufbau.

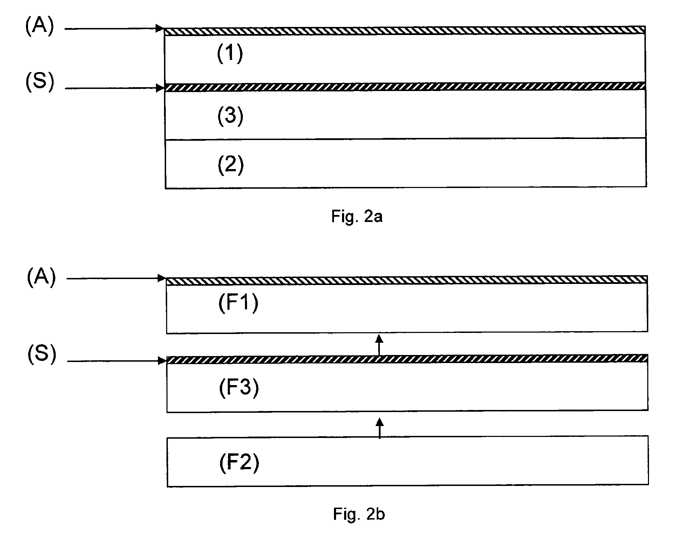

In einer anderen beispielhaften Ausführungsform des erfindungsgemäßen Schichtaufbaus für ein erfindungsgemäß hergestelltes Sicherheits- oder Wertdokument weist ein solcher eine erste und eine zweite gefüllte Schicht (1) und (2) und wenigstens eine weitere Schicht aus wenigstens einem thermoplastischen Kunststoff (3) zwischen den beiden gefüllten Schichten (1) und (2) auf, wobei zwischen den beiden gefüllten Schichten (1) und (2) ein mittels Laserdruck aufgebrachtes Wasserzeichen (S) enthalten ist. Der Schichtaufbau kann einen weiteren in Aufsicht deutlich erkennbaren teilflächigen Aufdruck (A) aufweisen. Eine solche Ausführungsform ist schematisch in Fig. 2a dargestellt. Ein Sicherheits- oder Wertdokument enthaltend einen solchen Schichtaufbau kann erfindungsgemäß hergestellt werden, indem eine Seite einer transparenten Kunststoff-Folie aus wenigstens einem thermoplastischen Kunststoff (F3) mit dem Wasserzeichen (S) und eine Seite wenigstens einer der beiden gefüllten Folien (F1) oder (F2) mit dem weiteren Aufdruck (A) bedruckt wird. Die Folien werden so in einem Folienstapel angeordnet, dass die mit dem Wasserzeichen (S) bedruckte Folie (F3) zwischen den beiden gefüllten Folien (F1) und (F2) liegt und die mit dem weiteren Aufdruck (A) bedruckte Seite der gefüllten Folie (F1) oder (F2) nach außen weist (vgl. Fig. 2b). Dieser Folienstapel wird dann anschließend laminiert.

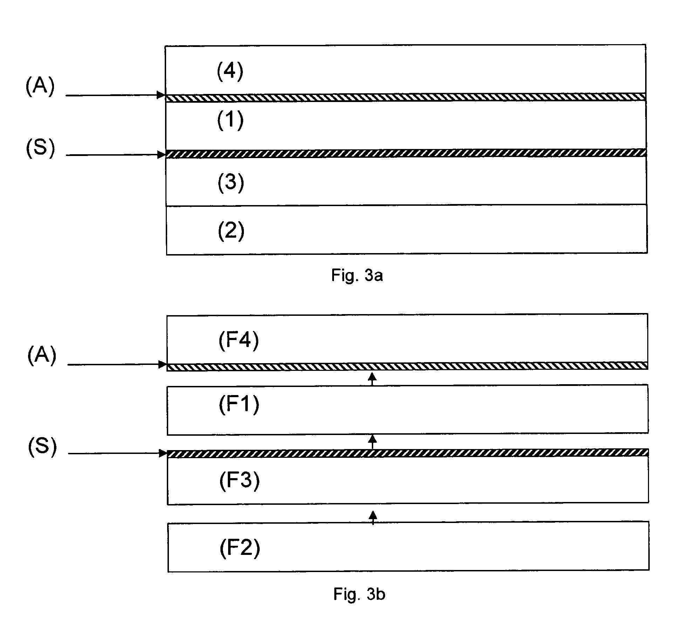

In einer weiteren beispielhaften Ausführungsform des erfindungsgemäßen Schichtaufbaus für ein erfindungsgemäß hergestelltes Sicherheits- oder Wertdokument weist ein solcher eine erste und eine zweite gefüllte Schicht (1) und (2), wenigstens eine weitere Schicht aus wenigstens einem thermoplastischen Kunststoff (3) zwischen den beiden gefüllten Schichten (1) und (2) auf, wobei zwischen den beiden gefüllten Schichten ein mittels Laserdruck aufgebrachtes Wasserzeichen (S) enthalten ist. Der Schichtaufbau enthält wenigstens eine weitere Schicht aus wenigstens einem thermoplastischen Kunststoff (4), welche nicht zwischen den beiden gefüllten Schichten (1) und (2) angeordnet ist und einen weiteren in Aufsicht deutlich erkennbaren teilflächigen Aufdruck (A) aufweist. Eine solche Ausführungsform ist schematisch in Fig. 3a dargestellt. Ein Sicherheits- oder Wertdokument enthaltend einen solchen Schichtaufbau kann erfindungsgemäß hergestellt werden, indem eine Seite einer transparenten Kunststoff-Folie aus wenigstens einem thermoplastischen Kunststoff (F3) mit dem Wasserzeichen (S) und eine Seite einer weiteren Folie aus wenigstens einem thermoplastischen Kunststoff (F4) mit dem weiteren Aufdruck (A) bedruckt wird. Die Folien werden so in einem Folienstapel angeordnet, dass die mit dem Wasserzeichen (S) bedruckte Folie zwischen den beiden gefüllten Folien liegt und die mit dem weiteren Aufdruck (A) bedruckte Folie (F4) auf eine der beiden gefüllten Folien (1) oder (2) von außen aufgelegt wird (vgl. Fig. 3b). Dieser Folienstapel wird dann anschließend laminiert.

Die erfindungsgemäßen Schichtaufbauten ermöglichen aufgrund der individuell gestaltbaren Wasserzeichen als Sicherheitsmerkmale die Fälschungssicherheit der erfindungsgemäßen Sicherheits- oder Wertdokumente, in denen sie enthalten sind, erheblich. Beispielsweise ist eine nachträgliche Öffnung des Dokuments und Ersatz lediglich der personalisierenden Identifikationsmerkmale aufgrund des ebenfalls personalisierten Wasserzeichen als Sicherheitsmerkmal nicht mehr möglich. Eine aufwendige Prägung wird durch das einfache Drucken der Wasserzeichen ersetzt, was sowohl die Individualisierung der Wasserzeichen ermöglich als auch die Detailschärfe des Wasserzeichens erhöht und damit zusätzliche Fälschungssicherheit bietet. Zudem widerstehen die aufgedruckten Wasserzeichen auch unbeschadet den Temperaturbelastungen beim Versiegeln in Form von beispielsweise Laminierung eines entsprechenden Folienstapels, was bei geprägten Wasserzeichen nicht ohne weiteres der Fall ist. Die erfindungsgemäßen Schichtaufbauten haben zudem den Vorteil, dass sie die einfache und kostengünstige Herstellung von erfindungsgemäßen Sicherheits- oder Wertdokumenten mit aufgrund der individuellen Wasserzeichen als Sicherheitsmerkmale erheblich größerer Fälschungssicherheit direkt an dem Ort ermöglichen, an dem diese für den Verwender ausgestellt werden, da hierzu lediglich die entsprechend bedruckbaren Folien, ein Laserdrucker sowie ein Laminiergerät erforderlich sind.

Die folgenden Beispiele dienen der exemplarischen Erläuterung der Erfindung, und sind nicht als Beschränkung aufzufassen.

### Beispiele

Der spezifische Oberflächenwiderstand in Ω wurde gemäß DIN IEC 93 bestimmt. Die Rauhigkeit wurde gemäß der Norm ISO 4288 bestimmt.

### Beispiel 1

Es wurde eine Polycarbonatfolie der Dicke 250 µm auf Basis Polycarbonat Makrolon 3108^{®} der Bayer MaterialScience AG und Perfluoroctansulfonsäuretetraethylammoniumsalz (Bayowet 248^{®} der Bayer MaterialScience AG) als Additiv mit einer Zusammensetzung von 98,5 Gew.-% Makrolon 3108^{®} und 1,5 Gew.-% Bayowet 248^{®} bei einer Massetemperatur von 280°C mittels Extrusion hergestellt. Der spezifische Oberflächenwiderstand der Folie wurde gemäß DIN IEC 93 (Ω) bestimmt und betrug 6.0 10¹² Ω.

Ein DIN-A 4 Folienmuster dieser Folie wurde mit einem Farblaserdrucker der Firma HP bedruckt (Model des Druckers: HP Colour Laserjet 4500 DN). Die Folie wurde auf der Seite mit der Nummer 2 bedruckt. (Rauhigkeit R3z < 9 µm).

Druckmuster: Teilflächiger Schwarz/Weiß-Druck (Porträt einer Person)

Auflösung des Druckmusters: 600 dpi.

Die Folie ließ sich einwandfrei bedrucken und zeigte ein fehlerfreies Druckbild.

Die bedruckte Folie wurde zwischen zwei weitere Folien der Dicke 100 µm auf Basis Polycarbonat Makrolon 3108^{®} der Bayer MaterialScience AG, welche durch Zugabe von 15 Gew.% TiO₂ als Füllstoff weiß transluzent eingefärbt waren, gelegt ("gefüllte Folien"). Diese gefüllten Folien zeigten eine Transmission von 10 % im sichtbaren Wellenlängenbereich von 380 nm bis 780 nm.

Der Folienstapel wurde in eine Laminierpresse der Firma Bürkle gelegt und unter Druck und Temperatur laminiert. Laminiert wurde mit folgenden Parametern:
Temperatur: 175°C
Niedriger Vordruck während der Aufwärmzeit: 15 N/cm²
Aufwärmdauer: 8 Minuten.
Hoher Druck während der Laminierung: 300 N/cm²
Laminierdauer: 2 Minuten.

Anschließend wurde Abkühlung der Presse eingeleitet. Abgekühlt wurde unter anhaltender Druckbeaufschlagung. Bei erreichen einer Temperatur von 38°C öffnete die Presse.

Aus dem laminierten Bogen wurden Karten gestanzt welche die Massen einer Karte nach ISO 7810 hatten.

Das Druckbild in der laminierten Karte zeigte keinerlei Beeinträchtigung.

Bei Betrachtung der Karte im Auflicht war das Druckbild im Inneren der Karte nicht zu erkennen. Erst bei Betrachtung der Karte im Gegenlicht war das "versteckte" Druckbild in der Karte zu erkennen (Wasserzeichen als Sicherheitsmerkmal).

### Beispiel 2: Herstellung einer Kunststoff-Identifikationskarte (ID-Karte) mit farbigem Portrait des Kartenhalters und individuell gestaltetem Wasserzeichen als Sicherheitsmerkmal in der Karte, welches das gleiche Portrait in schwarz/weiß wiedergibt.

a) Ein weiteres DIN-A 4 Folienmuster der wie in Beispiel 1 beschrieben hergestellten Folie wurde mit einem Farblaserdrucker der Firma HP bedruckt (Model des Druckers: HP Colour Laserjet 4500 DN). Die Folie wurde auf der Seite mit der Nummer 2 bedruckt. (Rauhigkeit R3z < 9 µm).
   Druckmuster: Farbiges Portrait des Kartenhalters und weitere Details (Persönliche Daten, Linienmuster etc.)
   Auflösung des Druckmusters: 600 dpi.
   Die Folie ließ sich einwandfrei bedrucken und zeigte ein fehlerfreies Druckbild.
b) Ein weiteres DIN-A 4 Folienmuster der wie in Beispiel 1 beschrieben hergestellten Folie wurde mit einem Farblaserdrucker der Firma HP bedruckt (Model des Druckers: HP Colour Laserjet 4500 DN). Die Folie wurde auf der Seite mit der Nummer 2 bedruckt. (Rauhigkeit R3z < 9 µm).
   Druckmuster: Schwarz/weiß Portrait des Kartenhalters
   Auflösung des Druckmusters: 600 dpi.
   Die Position des schwarz/weiss Portraits wurde so gewählt, dass bei übereinander legen mit der farbig bedruckten Folie aus a) keine Überlappung der Portraits entsteht. Dies diente lediglich dem einfacheren Erkennen des Wasserzeichens in der fertigen ID-Karte.
   Die Folie ließ sich einwandfrei bedrucken und zeigte ein fehlerfreies Druckbild.
c) Die unter b) bedruckte Folie wurde zwischen zwei weitere Folien der Dicke 100 µm auf Basis Polycarbonat Makrolon 3108^{®} der Bayer MaterialScience AG, welche durch Zugabe von 15 Gew.-% TiO₂ als Füllstoff weiß transluzent eingefärbt waren, gelegt ("gefüllte Folien"). Diese gefüllten Folien zeigten eine Transmission von 10 % im sichtbaren Wellenlängenbereich von 380 nm bis 780 nm.
d) Die unter a) bedruckte Folie wurde auf eine Seite des Folienpakets aus den Folien aus b) und c) gelegt. Die Folie aus a) wurde mit ihrer bedruckten Seite auf das Folienpaket gelegt. Damit wurde zudem sichergestellt dass das aufgedruckte Portrait und Druckmuster beim späteren Gebrauch der Karte gegen Abrieb oder sonstiger Beschädigung geschützt war.
e) Der Folienstapel wurde in eine Laminierpresse der Firma Bürkle gelegt und unter Druck und Temperatur laminiert. Laminiert wurde mit folgenden Parametern:
   Temperatur: 175°C
   Niedriger Vordruck während der Aufwärmzeit: 15 N/cm²
   Aufwärmdauer: 8 Minuten.
   Hoher Druck während der Laminierung: 240 N/cm²
   Laminierdauer: 2 Minuten.

Anschließend wurde Abkühlung der Presse eingeleitet. Abgekühlt wurde unter anhaltender Druckbeaufschlagung. Bei erreichen einer Temperatur von 38°C öffnete die Presse.

Aus dem laminierten Bogen wurden Karten gestanzt welche die Massen einer Karte nach ISO 7810 hatten.

Das Druckbild in der laminierten Karte zeigte keinerlei Beeinträchtigung.

Bei Betrachtung der Karte im Auflicht zeigte das farbige Druckbild aus a) keinerlei Beeinträchtigung oder Beschädigung; das Druckbild im Inneren der Karte war nicht zu erkennen. Erst bei Betrachtung der Karte im Gegenlicht war das "versteckte" Druckbild in der Karte zu erkennen Wasserzeichen als Sicherheitsmerkmal).

## Patentansprüche

1. Schichtaufbau, **dadurch gekennzeichnet, dass** er wenigstens eine erste Schicht aus wenigstens einem thermoplastischen Kunststoff und wenigstens einem Füllstoff und eine weitere Schicht aus wenigstens einem thermoplastischen Kunststoff und wenigstens einem Füllstoff ("gefüllte Schichten") aufweist, welche aus wenigstens einer ersten Kunststoff-Folie aus jeweils wenigstens einem thermoplastischen Kunststoff und wenigstens einem Füllstoff und wenigstens einer weiteren Kunststoff-Folie aus jeweils wenigstens einem thermoplastischen Kunststoff und wenigstens einem Füllstoff ("gefüllte Folien") hergestellt wurde, wobei zwischen den beiden gefüllten Schichten wenigstens ein mittels Laserdruck auf wenigstens eine bei der Herstellung eingesetzte Kunststoff-Folie aufgebrachtes Wasserzeichen enthalten ist.

2. Schichtaufbau gemäß Anspruch 1, **dadurch gekennzeichnet, dass** das oder die Wasserzeichen mittels Laserdruck auf wenigstens einer der beiden gefüllten Folien aufgebracht ist (sind).

3. Schichtaufbau gemäß Anspruch 1, **dadurch gekennzeichnet, dass** er wenigstens eine weitere Schicht aus wenigstens einem thermoplastischen Kunststoff zwischen den beiden gefüllten Schichten aufweist und die Schicht zwischen den beiden gefüllten Schichten hergestellt wurde aus einer transparenten Kunststoff-Folie aus wenigstens einem thermoplastischen Kunststoff, auf welche das oder die Wasserzeichen mittels Laserdruck aufgebracht ist (sind).

4. Schichtaufbau gemäß Anspruch 3, **dadurch gekennzeichnet, dass** es sich bei dem thermoplastischen Kunststoff der Schicht zwischen den beiden gefüllten Schichten um wenigstens einen thermoplastischen Kunststoff ausgewählt aus Polymerisaten von ethylenisch ungesättigten Monomeren und/oder Polykondensaten von bifunktionellen reaktiven Verbindungen, bevorzugt um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, Polyurethan(e), sowie Polyolefin(e), Poly- oder Copolykondensat(e) der Terephthalsäure oder Mischungen aus diesen handelt.

5. Schichtaufbau gemäß Anspruch 3 oder 4, **dadurch gekennzeichnet, dass** es sich bei es sich bei dem thermoplastischen Kunststoff der Schicht zwischen den beiden gefüllten Schichten um ein oder mehrere Polycarbonat(e) oder Copolycarbonat(e) auf Basis von Diphenolen oder einen Blend wenigstens eines Polycarbonats oder Copolycarbonats und wenigstens eines Poly- oder Copolykondensats der Terephthalsäure handelt.

6. Schichtaufbau gemäß wenigstens einem der Ansprüche 3 bis 5, **dadurch gekennzeichnet, dass** es sich bei der Kunststoff-Folie für die Schicht zwischen den beiden gefüllten Schichten um eine solche mit einen Schichtaufbau umfassend wenigstens drei Schichten handelt, wobei
a. wenigstens eine innere Schicht aus einem thermoplastischen Kunststoff mit einer Glastemperatur T_{g(Innen}) und
b. wenigstens eine untere und eine obere Schicht (äußere Schichten) aus einem thermoplastischen Kunststoff mit einer Glastemperatur T_{g(Außen)}, welche niedriger ist als die Glastemperatur T_{g(Innen)}.

7. Schichtaufbau gemäß wenigstens einem der Ansprüche 1 bis 6, **dadurch gekennzeichnet, dass** die eingesetzte, das oder die mittels Laserdruck aufgebrachten Sicherheitsmerkmal(e) aufweisende Kunststoff-Folie einen spezifischen Oberflächenwiderstand von 10⁷ bis 10¹³ Ω, bevorzugt von 10⁸ bis 10¹² Ω aufweist.

8. Schichtaufbau gemäß wenigstens einem der Ansprüche 1 bis 7, **dadurch gekennzeichnet, dass** die thermoplastische Kunststoffzusammensetzung der eingesetzten, das oder die mittels Laserdruck aufgebrachten Sicherheitsmerkmal(e) aufweisenden Kunststoff-Folie ein Additiv ausgewählt aus quaternären Ammonium- oder Phosphoniumsalzen einer teil- oder perfluorierten organischen Säure oder quaternären Ammonium- oder Phosphoniumhexafluorophosphaten enthält.

9. Schichtaufbau gemäß wenigstens einem der Ansprüche 1 bis 8, **dadurch gekennzeichnet, dass** es sich bei dem thermoplastischen Kunststoff der gefüllten Schichten unabhängig voneinander um wenigstens einen thermoplastischen Kunststoff ausgewählt aus Polymerisaten von ethylenisch ungesättigten Monomeren und/oder Polykondensaten von bifunktionellen reaktiven Verbindungen, bevorzugt um ein oder mehrere Polycarbonat(e) oder Copolycarbonat(e) auf Basis von Diphenolen, Poly- oder Copolyacrylat(e) und Polyoder Copolymethacrylat(e), Poly- oder Copolymer(e) mit Styrol, Polyurethan(e), sowie Polyolefm(e), Poly- oder Copolykondensat(e) der Terephthalsäure oder Mischungen aus diesen handelt.

10. Schichtaufbau gemäß wenigstens einem der Ansprüche 1 bis 9, **dadurch gekennzeichnet, dass** es sich bei dem oder den mittels Laserdruck aufgebrachten Wasserzeichen um einen oder mehrere teilflächige(n) Aufdruck(e), bevorzugt um einen oder mehrere individuelle(n) Aufdruck(e) handelt.

11. Schichtaufbau gemäß wenigstens einem der Ansprüche 1 bis 10, **dadurch gekennzeichnet, dass** es sich bei dem Füllstoff in den gefüllten Schichten um ein Farbpigment oder einen sonstigen Füllstoff zur Erzeugung einer Transluzenz der gefüllten Schichten, bevorzugt um Titandioxid, Zirkoniumdioxid, Bariumsulfat oder Glasfasern handelt.

12. Schichtaufbau gemäß wenigstens einem der Ansprüche 1 bis 11, **dadurch gekennzeichnet, dass** auf wenigstens eine, bevorzugt eine der beiden gefüllten Schichten eine weitere Schicht aus wenigstens einem thermoplastischen Kunststoff aufgebracht ist, welche transparent ist und wenigstens einen teilflächigen Aufdruck, bevorzugt einen teilflächigen Farblaseraufdruck, besonders bevorzugt einen teilflächigen Farblaseraufdruck, welcher der Form nach ganz oder teilweise mit dem mittels Laserdruck aufgebrachten Wasserzeichen identisch ist, aufweist.

13. Sicherheits- oder Wertdokument, bevorzugt personalisiertes Sicherheitsdokument, enthaltend wenigstens einen Schichtaufbau gemäß wenigstens einem der Ansprüche 1 bis 12.

14. Verfahren zur Herstellung eines Sicherheits- oder Wertdokuments gemäß Anspruch 13,
**dadurch gekennzeichnet, dass** wenigstens
a. eine Kunststoff-Folie aus wenigstens einem thermoplastischen Kunststoff und gegebenenfalls wenigstens einem Füllstoff auf einer Seite mittels Laserdruck mit wenigstens einem Wasserzeichen bedruckt wird, und
b. die mit wenigstens einem Wasserzeichen bedruckte Kunststoff-Folie auf der anderen Seite oder wenigstens eine weitere Kunststoff-Folie aus wenigstens einem thermoplastischen Kunststoff und gegebenenfalls wenigstens einem Füllstoff auf einer Seite mit wenigstens einem teilflächigen Aufdruck, bevorzugt mittels Farblaserdruck mit wenigstens einem teilflächigen Farbaufdruck versehen wird, und
c. ein Folienstapel gebildet wird enthaltend
i. wenigstens eine erste Kunststoff-Folie aus jeweils wenigstens einem thermoplastischen Kunststoff und wenigstens einem Füllstoff ("erste gefüllte Folie"), und
ii. wenigstens eine weitere Kunststoff-Folie aus jeweils wenigstens einem thermoplastischen Kunststoff und wenigstens einem Füllstoff ("weitere gefüllte Folie"), und
iii. gegebenenfalls wenigstens eine transparente Kunststoff-Folie aus wenigstens einem thermoplastischen Kunststoff zwischen der ersten und weiteren gefüllten Folie ("Zwischenfolie"),
wobei das oder die mittels Laserdruck aufgebrachte(n) Wasserzeichen sich auf wenigstens einer der Folien unter i., ii. oder iii. befindet und für den Fall, dass sich das oder die mittels Laserdruck aufgebrachte(n) Wasserzeichen auf der Zwischenfolie unter iii. befindet, diese Folie zwingend im Folienstapel enthalten ist, und die Folien derart angeordnet sind, dass sich das oder die mittels Laserdruck aufgebrachte(n) Wasserzeichen zwischen der ersten und weiteren gefüllten Folie befindet, und
iv. gegebenenfalls wenigstens eine weitere, transparente, auf einer der gefüllten Folien aufliegenden Kunststoff-Folie, welche den mittels Laserdruck aufgebrachten teilflächigen Aufdruck, bevorzugt mittels Farblaserdruck aufgebrachten teilflächigen Farbaufdruck aufweist ("Aufdruckfolie"), und
v. gegebenenfalls weiterer Kunststoff-Schutzfolien ("Schutzfolie(n)"), und
d. der Folienstapel anschließend laminiert und/oder verklebt wird.
